# EUROPEAN PATENT SPECIFICATION

(11) **EP 2 601 450 B1**
(45) Date of publication and mention of the grant of the patent: **04.09.2019**
(21) Application number: 10855678.8
(22) Date of filing: 28.12.2010
(51) Int. Cl.: F24F 5/00, F24F 13/32, F24F 1/56, F24F 1/06, H02S 30/20

(54) **AIR CONDITIONER WITH SOLAR CELL**
KLIMAANLAGE MIT SOLARZELLE
APPAREIL DE CONDITIONNEMENT D'AIR DOTÉ D'UNE CELLULE SOLAIRE

(30) Priority: 02.08.2010 KR 20100074624
(43) Date of publication of application: 12.06.2013
(73) Proprietor: LG Electronics Inc., Yeongdeungpo-gu Seoul 150-721 (KR)
(72) Inventor: LEE, Jae Min, Changwon-si Gyeongsangnam-do 641-711 (KR); PARK, Su Jun, Changwon-si Gyeongsangnam-do 641-711 (KR)
(74) Representative: Vossius & Partner Patentanwälte Rechtsanwälte mbB
(86) International application number: PCT/KR2010/009385
(87) International publication number: WO 2012/018165

(56) References cited:
- EP-A2- 0 576 280
- JP-A- 2005 156 059
- JP-A- 2005 249 268
- KR-A- 19980 084 194
- KR-A- 20040 085 963
- KR-A- 20040 085 963
- KR-A- 20070 010 546
- KR-B1- 100 629 891
- US-A- 6 101 716
- US-A- 6 134 902

## Description

### Technical Field

The present disclosure relates to an air conditioner including a solar cell capable of converting solar energy into electric energy.

### Background Art

In general, an air conditioner is an apparatus configured to heat and cool an indoor area through a refrigerant cycle of compression-condensation-expansion-evaporation.

Such an air conditioner includes an indoor unit where a refrigerant exchanges heat with indoor air, and an outdoor unit where the refrigerant exchanges heat with outdoor air. The indoor unit includes an indoor heat exchanger where the refrigerant exchanges heat with indoor air, a fan configured to blow indoor air, and a motor configured to rotate the fan. The outdoor unit includes an outdoor heat exchanger where the re-frigerant exchanges heat with outdoor air, a fan configured to blow outdoor air, a motor configured to rotate the fan, a compressor configured to compress the re-frigerant, an expansion part configured to expand the refrigerant, and a four-way valve configured to charge the flow direction of the refrigerant.

When an indoor area is cooled, the indoor heat exchanger is used as an evaporator, and the outdoor unit is used as a condenser. When the indoor area is heated, the indoor heat exchanger is used as a condenser, and the outdoor unit is used as an evaporator. Switching between cooling and heating modes is carried out by changing the flow direction of the refrigerant by using the four-way valve.

JP 2005 249268 A relates to an air conditioner, and more particularly to a technique of installing a solar panel on an outdoor unit of an air conditioner, wherein an installation angle can be changed.

### Disclosure of Invention

### Technical Problem

Embodiments provide an air conditioner including a solar cell panel the light-receiving area of which can be varied.

### Solution to Problem

According to the invention, there is provided an air conditioner comprising: an outdoor unit configured to exchange heat with outdoor air; and a solar cell panel disposed at a side of the outdoor unit and comprising a plurality of parts that are relatively movable, the plurality of parts comprising power generation regions configured to generate electricity from solar light,wherein as the plurality of parts are moved relatively to each other, areas of the power generation regions exposed to the sun are varied, whereby as the plurality of parts are moved relative to each other, the solar cell panel is selectively switched to one of a first disposition where the power generation regions of the plurality of parts are exposed to the sun and a second disposition where the power generation regions of the plurality of parts are not exposed to the sun, and the solar cell panel is rotatably connected to the outdoor unit,wherein in the first disposition, the solar cell panel is kept in a rotated state where the power generation region is exposed to the sun, and in the second disposition, the solar cell panel is kept in a rotated state where the power generation region faces the outdoor unit.

### Advantageous Effects of Invention

According to the present embodiments, thhe power generation capacity of the solar cell panel can be varied, and the solar cell panel can be disposed in a smaller space.

### Brief Description of Drawings

Fig. 1 is a perspective view illustrating a minimum light-receiving power generation operation of an air conditioner including a solar cell according to a first embodiment.
Fig. 2 is a view illustrating flows of a refrigerant in the air conditioner including the solar cell according to the first embodiment.
Fig. 3 is a perspective view illustrating a maximum light-receiving power generation operation of the air conditioner including the solar cell according to the first embodiment.
Fig. 4 is a perspective view illustrating a minimum light-receiving power generation operation of an air conditioner including a solar cell according to a second embodiment.
Fig. 5 is a side view illustrating the minimum light-receiving power generation operation of the air conditioner including the solar cell according to the second embodiment.
Fig. 6 is a perspective view illustrating a maximum light-receiving power generation operation of the air conditioner including the solar cell according to the second embodiment.
Fig. 7 is a side view illustrating the maximum light-receiving power generation operation of the air conditioner including the solar cell according to the second embodiment.
Fig. 8 is a perspective view illustrating a solar power generation operation of an air conditioner including a solar cell according to a third embodiment.
Fig. 9 is a side view illustrating the solar power generation operation of the air conditioner including the solar cell according to the third embodiment.
Fig. 10 is a perspective view illustrating a stop of the solar power generation operation of the air conditioner including the solar cell according to the third embodiment.
Fig. 11 is a side view illustrating the stop of the solar power generation operation of the air conditioner including the solar cell according to the third embodiment.
Fig. 12 is a perspective view illustrating a solar power generation operation of an air conditioner including a solar cell according to a fourth embodiment.
Fig. 13 is a side view illustrating the solar power generation operation of the air conditioner including the solar cell according to the fourth embodiment.
Fig. 14 is a perspective view illustrating a stop of the solar power generation operation of the air conditioner including the solar cell according to the fourth embodiment.
Fig. 15 is a perspective view illustrating a solar power generation operation of an air conditioner including a solar cell according to a fifth embodiment.
Fig. 16 is a side view illustrating the solar power generation operation of the air conditioner including the solar cell according to the fifth embodiment.
Fig. 17 is a perspective view illustrating a stop of the solar power generation operation of the air conditioner including the solar cell according to the fifth embodiment.
Fig. 18 is a side view illustrating the stop of the solar power generation operation of the air conditioner including the solar cell according to the fifth embodiment.

### Mode for the Invention

Reference will now be made in detail to the embodiments of the present disclosure, examples of which are illustrated in the accompanying drawings.

In the following detailed description of the preferred embodiments, reference is made to the accompanying drawings that form a part hereof, and in which is shown by way of illustration specific preferred embodiments in which the invention may be practiced. These embodiments are described in sufficient detail to enable those skilled in the art to practice the invention, and it is understood that other embodiments may be utilized and that logical structural, mechanical, electrical, and chemical changes may be made without departing from the scope of the invention. To avoid detail not necessary to enable those skilled in the art to practice the invention, the description may omit certain information known to those skilled in the art. The following detailed description is, therefore, not to be taken in a limiting sense, and the scope of the present invention is defined only by the appended claims.

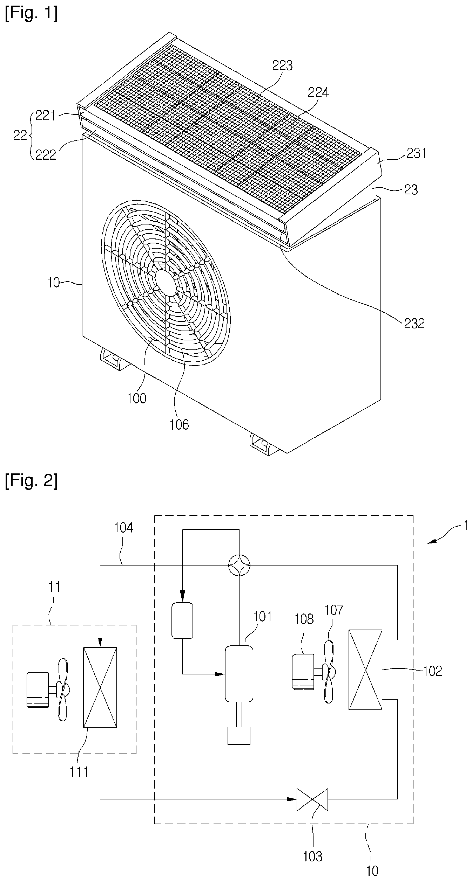

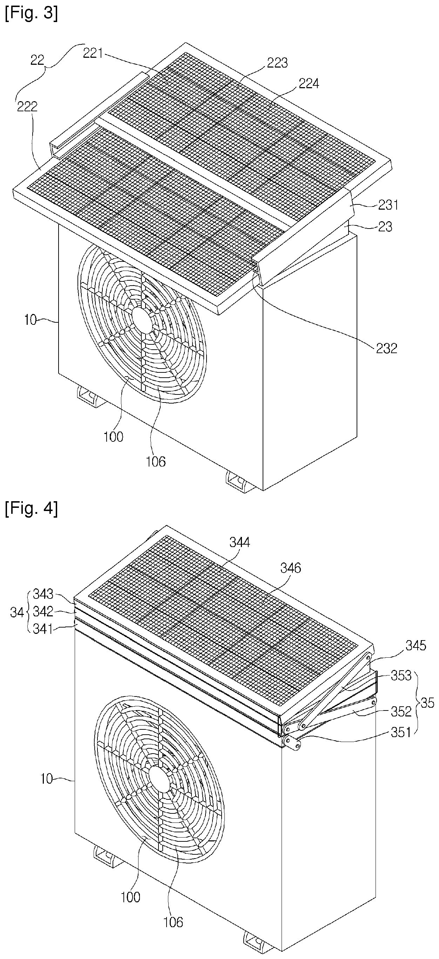

Fig. 1 is a perspective view illustrating a minimum light-receiving power generation operation of an air conditioner including a solar cell according to a first embodiment; Fig. 2 is a view illustrating flows of a refrigerant in the air conditioner including the solar cell according to the first embodiment; and Fig. 3 is a perspective view illustrating a maximum light-receiving power generation operation of the air conditioner including the solar cell according to the first embodiment.

Referring to Figs. 1 and 2, an air conditioner 1 is equipped with a solar cell. The air conditioner 1 includes an outdoor unit 10 configured to exchange heat with outdoor air, a solar cell panel 22 configured to generate electricity from solar light, and a plurality of panel connection parts 23 configured to connect the solar cell panel 22 to the outdoor unit 10.

The outdoor unit 10 may be connected to an indoor unit 11 which changes heat with indoor air and to refrigerant conduits 104, so that indoor air conditioning can be performed.

In addition, the air conditioner 1 may include: a compressor 101 configured to compress a refrigerant; an indoor heat exchanger 111 in which the refrigerant exchanges heat with indoor air; an expansion part 103 configured to expand the re-frigerant; an outdoor heat exchanger 102 in which the refrigerant exchanges heat with outdoor air; and refrigerant conduits 104 used to sequentially connect the compressor 101, the indoor heat exchanger 111, the expansion part 103, and the outdoor heat exchanger 102. As a refrigeration cycle is repeated by circulating the refrigerant sequentially or reversely through the compressor 101, the indoor heat exchanger 111, the expansion part 103, and the outdoor heat exchanger 102, indoor air cooling or heating, that is, air conditioning can be performed.

Here, the compressor 101, the outdoor heat exchanger 102, and the expansion part 103 are disposed in the outdoor unit 10, and the indoor heat exchanger 111 is disposed in the indoor unit 11. Alternatively, two expansion parts 103 may be disposed in the outdoor unit 10 and the indoor unit 11, respectively, and the expansion parts 103 may be selectively used according to the flow direction of the refrigerant.

A discharge outlet 100 may be formed in the front side of the outdoor unit 10 to discharge outdoor air, and a discharge grill 106 may be disposed on the discharge outlet 100 to prevent introduction of foreign particles into the outdoor unit 10. The outdoor heat exchanger 102, an outdoor fan 107 configured to blow outdoor air toward the outdoor heat exchanger 102, and a fan motor 108 may be disposed in the outdoor unit 10. In addition, the compressor 101 may be disposed in the outdoor unit 10.

The solar cell panel 22 includes a solar battery capable of generating electricity by using solar light. A minimum unit of the solar battery may be referred to as a cell. That is, the solar cell panel 22 is an assembly of a plurality of solar cells 224.

In detail, the solar cell panel 22 may include the solar cells 224, a glass attached to the front sides of the solar cells 224, and a back sheet attached to the rear sides of the solar cells 224. The solar cell panel 22 may further include: an infrared reflection film disposed between the solar cells 224 and the glass; a reflection film provided at the back sheet; and a refraction film disposed between the solar cells 224 and the back sheet.

In the solar cell panel 22, a region where the solar cells 224 are exposed through the glass may be defined as a power generation region 223, and the other region such as a side opposite to the side where the glass is attached may be defined as a power non-generation region. That is, when solar light is incident on the solar cells 224, electricity is generated in the power generation region 223 but not generated in the power non-generation region.

The solar cell panel 22 is disposed on the topside of the outdoor unit 10. In detail, the solar cell panel 22 may be disposed on the topside of the outdoor unit 10 in a manner such that the panel connection parts 23 are connected to the topside of the outdoor unit 10 and the solar cell panel 22 is connected to the panel connection parts 23.

The solar cell panel 22 includes first and second parts 221 and 222 that are slidably connected to each other. In detail, the first part 221 of the solar cell panel 22 is exposed to the outside, and the second part 222 is disposed at a position lower than the position of the first part 221 and is slidable in parallel with the first part 221. In this case, the first part 221 and the second part 222 include power generation regions 223, respectively. The power generation regions 223 of the first part 221 and the second part 222 are located on the topside of the first part 221 and the topside of the second part 222, respectively. Therefore, the power generation region 223 of the first part 221 may always be exposed to the sun, and the power generation region 223 of the second part 222 may be at the rear side of the first part 221 or be exposed to the sun if the second part 222 is slid away from the first part 221. That is, according to the sliding of the first and second parts 221 and 222, the light-receiving area of the solar cell panel 22 can be varied. That is, a varying area of the power generation region 223 of the solar cell panel 22 can be exposed to the sun.

The panel connection parts 23 are fixed to the topside of the outdoor unit 10, and in this state, the panel connection parts 23 supports the first and second parts 221 and 222 in a manner such that the first and second parts 221 and 222 can slide relative to each other. In more detail, the panel connection parts 23 include guide parts 231 to guide movements of the first and second parts 221 and 222. The guide parts 231 are disposed on upper ends of the panel connection parts 23 at a predetermined oblique angle. The guide parts 231 include guide grooves 232 to guide the first and second parts 221 and 222 in a manner such that the first and second parts 221 and 222 can be moved back and forth relative to each other in an inclined direction. The guide grooves 232 are formed in lateral inner sides of the guide parts 231 so that both lateral ends of the first and second parts 221 and 222 can be accommodated in the guide grooves 232. Front and rear ends of the guide grooves 232 are opened so that the first and second parts 221 and 222 can be extended from and retracted into the guide grooves 232 in a state where the first and second parts 221 and 222 are accommodated in the guide grooves 232.

The guide parts 231 may further include stoppers to limit sliding motions of the first and second parts 221 and 222 so that the first and second parts 221 and 222 cannot be detached from the guide parts 231.

In the air conditioner 1, the light-receiving area of the solar cell panel 22 can be varied according to the necessary amount of power generation. For example, if the necessary amount of power generation is relatively small like the case of a minimum light-receiving power generation operation, the first and second parts 221 and 222 may be slid to each other to block the power generation region 223 of the second part 222 and expose only the power generation region 223 of the first part 221 to the sun. On the other hand, if the necessary amount of power generation is relatively large like the case of a maximum light-receiving power generation operation, the first and second parts 221 and 222 may be slid away from each other to expose both the power generation regions 223 of the first and second parts 221 and 222.

Furthermore, in the case where the necessary amount of power generation is relatively small, the solar cell panel 22 may occupy less space because the first and second parts 221 and 222 are slid to each other.

Hereinafter, an explanation will be given of an air conditioner including a solar cell according to a second embodiment with reference to the accompanying drawings. Unlike the first embodiment, in the current embodiment, a plurality of parts of a solar cell panel are configured to be folded by rotating the plurality of parts so that the light-receiving area of the solar cell panel can be varied. In the current embodiment, the same elements as those of the first embodiment will not be described again.

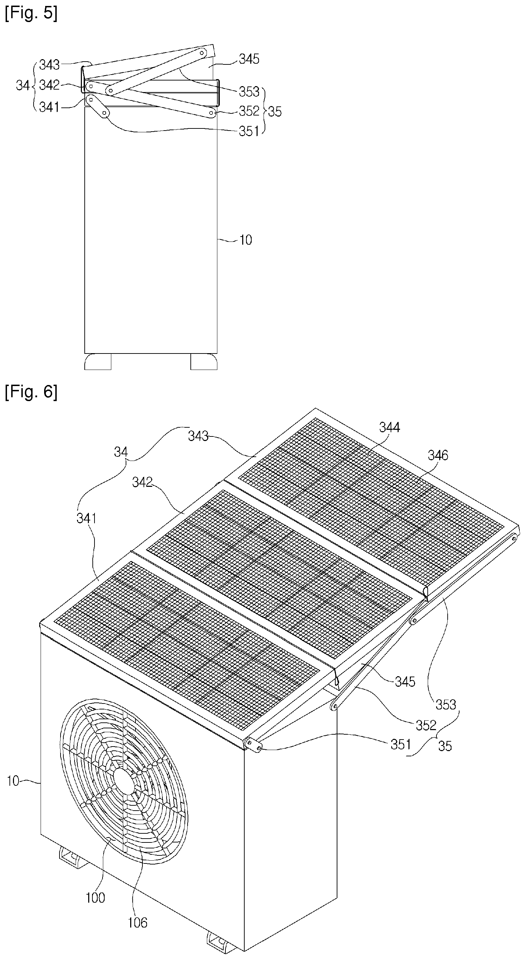

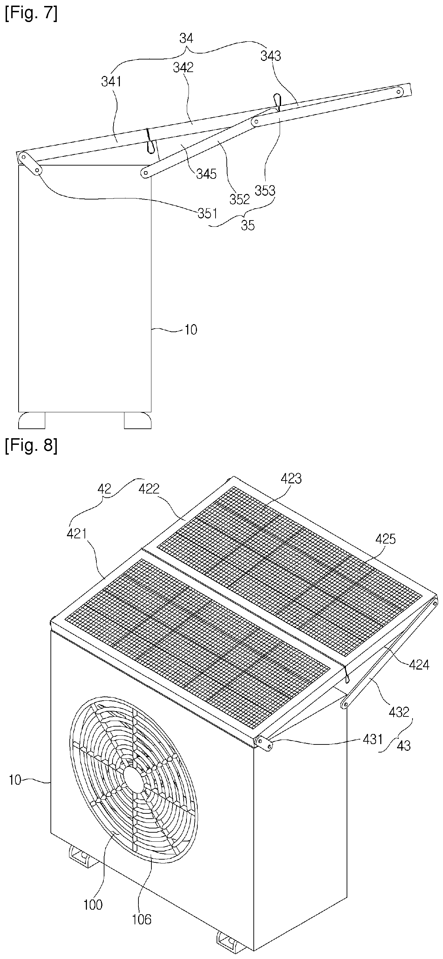

Fig. 4 is a perspective view illustrating a minimum light-receiving power generation operation of an air conditioner including a solar cell according to a second embodiment, and Fig. 5 is a side view illustrating the minimum light-receiving power generation operation of the air conditioner including the solar cell according to the second embodiment. Fig. 6 is a perspective view illustrating a maximum light-receiving power generation operation of the air conditioner including the solar cell according to the second embodiment, and Fig. 7 is a side view illustrating the maximum light-receiving power generation operation of the air conditioner including the solar cell according to the second embodiment.

Referring to Figs. 4 to 7, a solar cell panel 34 of the current embodiment includes a plurality of parts 341, 342, and 343. The parts 341, 342, and 343 are rotatably connected to each other so that the parts 341, 342, and 343 can be folded.

In detail, the solar cell panel 34 includes a first part 341 that can be selectively placed on the topside of an outdoor unit 10, a second part 342 rotatably connected to a rear end of the first part 341, and a third part 343 rotatably connected to a front end of the second part 342.

In more detail, the first part 341 is the lowermost one of the plurality of parts 341, 342, and 343 and is selectively placed on the topside of the outdoor unit 10 as the plurality of parts 341, 342, and 343 are folded or extended. The second part 342 is rotatably hinged on a rear upper end of the first part 341 so that the second part 342 can be folded to a front upper side of the first part 341. The third part 343 is rotatably hinged on a front upper end of the second part 342 so that the third part 343 can be folded to a rear upper side of the second part 342. In addition, the third part 343 is the uppermost one of the plurality of parts 341, 342, and 343. The third part 343 is exposed to the sun regardless whether the plurality of parts 341, 342, and 343 are folded or extended.

The plurality of parts 341, 342, and 343 may be connected to each other through electric wires so that electricity generated in the plurality of parts 341, 342, and 343 can be transmitted.

Panel connection parts 35 include: first connection parts 351 rotatably connected to lateral front ends of the outdoor unit 10 and lateral front ends of the first part 341; second connection parts 352 rotatably connected to lateral rear ends of the outdoor unit 10 and lateral front ends of the second part 342; and third connection parts 353 rotatably connected to lateral sides of the second connection parts 352 and lateral rear ends of the third part 343.

Five-bar linkages are formed by the outdoor unit 10, the first connection parts 351, the first part 341, the second part 342, and the second connection parts 352. The first and second parts 341 and 342 may be folded so that power generation regions 344 of the first and second parts 341 and 342 can face each other. Four-bar linkages are formed by the third connection parts 353, the third part 343, the second part 342, and the second connection parts 352. The second and third parts 342 and 343 may be folded so that power generation regions 344 of the second and third parts 342 and 343 can face each other.

That is, the solar cell panel 34 can be folded so that only the third part 343 of the plurality of parts 341, 342, and 343 can be exposed to the sun. In addition, the solar cell panel 34 can be extended so that all the power generation regions 344 of the plurality of parts 341, 342, and 343 can be exposed to the sun.

The solar cell panel 34 further includes a support part 345 so that the power generation region 344 of the third part 343 can be positioned at a predetermined angle when the plurality of parts 341, 342, and 343 are folded. According to the predetermined angle of the third part 343 when the plurality of parts 341, 342, and 343 are folded, the shape of the support part 345 may be determined. For example, if the third part 343 is inclined forward at an angle of 45 , the sectional shape of the support part 345 may be an isosceles right triangle shape. The support part 345 may be disposed on at least one of the rear surfaces of the second and third parts 342 and 343.

In the air conditioner, the light-receiving area of the solar cell panel 34 can be varied according to the necessary amount of power generation. For example, if the necessary amount of power generation is relatively small like the case of a minimum light-receiving power generation operation, the plurality of parts 341, 342 and 343 may be folded to expose only the power generation region 344 of the third part 343 to the sun. That is, in the minimum light-receiving power generation operation, the first and second parts 341 and 342 may be rotated and folded so that the power generation regions 344 of the first and second parts 341 and 342 cannot be exposed. On the other hand, if the necessary amount of power generation is relatively great like the case of a maximum light-receiving power generation operation, the plurality of parts 341, 342 and 343 may be extended to expose all the power generation regions 344 of the plurality of parts 341, 342 and 343 to the sun.

Furthermore, in the case where the necessary amount of power generation is relatively small, the solar cell panel 34 may occupy less space because the plurality of parts 341, 342, and 343 are folded.

Hereinafter, an explanation will be given of an air conditioner including a solar cell according to a third embodiment with reference to the accompanying drawings. Unlike the first embodiment, in the current embodiment, a solar cell panel can be switched between a first disposition in which the solar cell panel can be operated and a second disposition in which the solar cell panel can be protected, according to the necessity of power generation. In the current embodiment, the same elements as those of the first embodiment will not be described again.

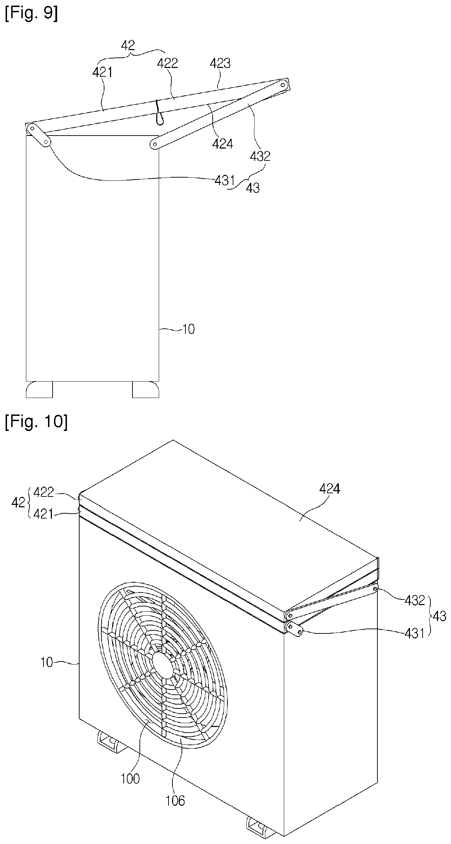

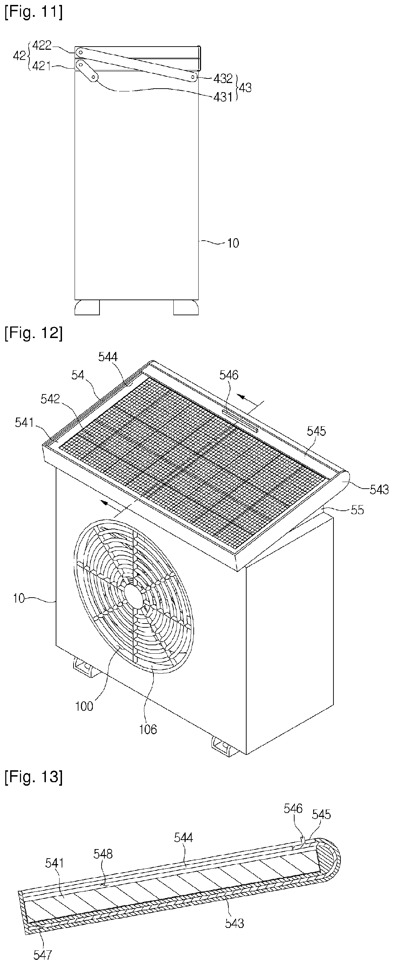

Fig. 8 is a perspective view illustrating a solar power generation operation of an air conditioner including a solar cell according to a third embodiment, and Fig. 9 is a side view illustrating the solar power generation operation of the air conditioner including the solar cell according to the third embodiment. Fig. 10 is a perspective view illustrating a stop of the solar power generation operation of the air conditioner including the solar cell according to the third embodiment, and Fig. 11 is a side view illustrating the stop of the solar power generation operation of the air conditioner including the solar cell according to the third embodiment.

Referring to Figs. 8 to 11, a solar cell panel 42 of the current embodiment includes a plurality of parts (for example, first and second parts 421 and 422). The plurality of parts 421 and 422 are rotatably connected to each other so that the plurality of parts 421 and 422 can be folded. In detail, the plurality of parts 421 and 422 are rotatably connected by using a hinge.

Two panel connection parts 43 are provided on ends of both sides of the solar cell panel 42. Each of the two panel connection parts 43 includes a first connection part 431 rotatably connected to the first part 421 of the plurality of parts 421 and 422 and an outdoor unit 10, and a second connection part 432 rotatably connected to the second part 422 of the plurality of parts 421 and 422 and the outdoor unit 10.

Therefore, the solar cell panel 42 can be switched between a first disposition in which power generation regions 423 of the solar cell panel 42 are exposed to the sun and a second disposition in which the power generation regions 423 are not exposed to the sun. That is, if the solar cell panel 42 is in the first disposition, the plurality of parts 421 and 422 are in an extended state. On the other hand, if the solar cell panel 42 is in the second disposition, the plurality of parts 421 and 422 are in a folded state so that the power generation regions 423 of the plurality of parts 421 and 422 can face each other.

In more detail, when the solar cell panel 42 is extended, the first part 421 is positioned at a front side, and the second part 422 is positioned at a rear side. In a state that the solar cell panel 42 is extended, the rear end side of the first part 421 and the front end side of the second part 422 are rotatably connected to each other by using a hinge.

When the solar cell panel 42 is extended, the first and second parts 421 and 422 are positioned on the topside of the solar cell panel 42 so that the power generation regions 423 of the first and second parts 421 and 422 can be exposed to the sun. The rear end side of the first part 421 and the front end side of the second part 422 are coupled by using a hinge in a manner such that the first and second parts 421 and 422 can be rotated upward around the rear end side of the first part 421 and the front end side of the second part 422. That is, when the first and second parts 421 and 422 are folded, the power generation regions 423 of the first and second parts 421 and 422 face each other.

In addition, the first connection part 431 is rotatably connected to the front end side of the first part 421 and a side of the outdoor unit 10, and the second connection part 432 is rotatably connected to the rear end side of the second part 422 and the other side of the outdoor unit 10. In more detain, an end of the first connection part 431 is rotatably fixed to the front end side of the first part 421, and the other end of the first connection part 431 is rotatably fixed to the side of the outdoor unit 10. An end of the second connection part 432 is rotatably fixed to the rear end side of the second part 422, and the other end of the second connection part 432 is rotatably fixed to the other side of the outdoor unit 10. Here, the other end of the first connection part 431 is fixed to the side of the outdoor unit 10 at a position ahead of the other end of the second connection part 432. Therefore, five-bar linkage is formed by the outdoor unit 10, the first part 421, the second part 422, the first connection part 431, and the second connection part 432, and the first and second parts 421 and 422 can be rotated to an extended or folded state.

The plurality of parts 421 and 422 may be connected to each other through an electric wire so that electricity generated in the plurality of parts 421 and 422 can be transmitted.

The first connection part 431 is shorter than the second connection part 432, and the length of the second connection part 432 is greater than the length of the lateral side of the second part 422. Therefore, when the first and second parts 421 and 422 are extended, the solar cell panel 42 faces forward and is inclined downwardly to receive more solar light. In addition, the first and second parts 421 and 422 can be rotated in a manner such that the second part 422 can be completely folded to the first part 421 and completely unfolded from the first part 421.

The first disposition of the solar cell panel 42 is shown in Figs. 8 and 9. The second disposition of the solar cell panel 42 is shown in Figs. 10 and 11.

In the air conditioner 1, the solar cell panel 42 can be switched between the first disposition and the second disposition according to the operation of the solar cell panel 42, that is, according to the necessity of power generation at the power generation regions 423. In more detail, when the solar cell panel 42 is used, that is, when power generation is necessary at the power generation regions 423, the solar cell panel 42 is switched to and kept in the first disposition. Then, both the power generation regions 423 of the first and second parts 421 and 422 are exposed to the sun. When the solar cell panel 42 is not used, that is, when power generation is not necessary at the power generation regions 423, the solar cell panel 42 is switched to and kept in the second disposition.

In the second disposition, since the first and second parts 421 and 422 are folded to face each other, the power generation regions 423 can be protected from external environments. For example, since the outdoor unit 10 of the air conditioner 1 is usually placed in an outdoor area, the power generation regions 423 of the solar cell panel 42 can be damaged due to various reasons such as bad weather, rain, and hail. In that case, since the amount of incident light is usually small, the solar cell panel 42 is not used, and the solar cell panel 42 is switched to and kept in the first disposition to protect the power generation regions 423.

Hereinafter, an explanation will be given of an air conditioner including a solar cell according to a fourth embodiment with reference to the accompanying drawings. Unlike the first embodiment, in the current embodiment, a power generation region of a solar cell panel is selected screened by using a shield so that the light-receiving area of the power generation region of the solar cell panel can be varied or the power generation region of the solar cell panel can be protected. In the current embodiment, the same elements as those of the first embodiment will not be described again.

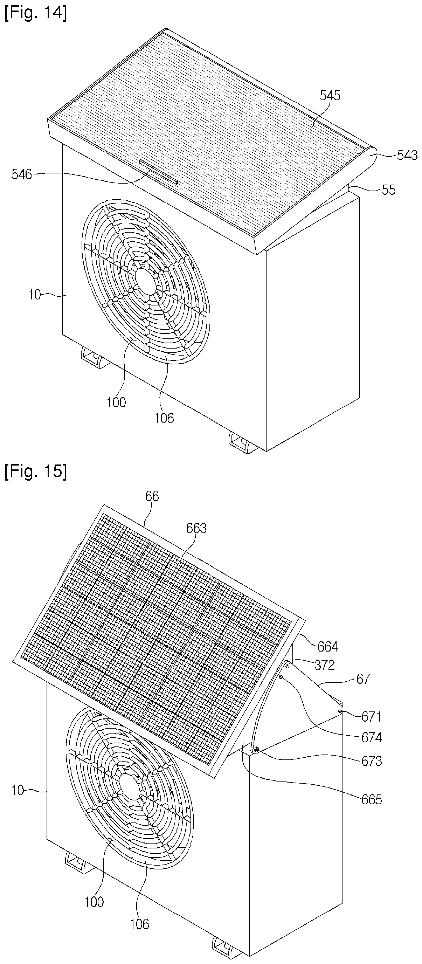

Fig. 12 is a perspective view illustrating a solar power generation operation of an air conditioner including a solar cell according to a fourth embodiment, Fig. 13 is a side view illustrating the solar power generation operation of the air conditioner including the solar cell according to the fourth embodiment, and Fig. 14 is a perspective view illustrating a stop of the solar power generation operation of the air conditioner including the solar cell according to the fourth embodiment.

Referring to Figs. 12 to 14, a solar cell panel 54 includes a shield 545 to selectively screen a power generation region 542.

In detail, the solar cell panel 54 includes a panel 541 configured to generate electricity from solar light, an accommodation part 543 in which the panel 541 is placed, and a shield 545 used to selectively expose the panel 541 to the sun in a state where the panel 541 is accommodated in the accommodation part 543. The panel 541 is shaped like a rectangular flat plate and includes a power generation region 542 configured to generate electricity from incident solar light. The power generation region 542 is located on the topside of the panel 541. The accommodation part 543 has an inner space in which the panel 541 can be accommodated. In a state that the panel 541 is accommodated in the accommodation part 543, the topside of the accommodation part 543 is opened so that the power generation region 542 of the panel 541 can be exposed to the sun.

The shield 545 can be slid along the topside of the accommodation part 543 to selectively expose the power generation region 542 to the sun. In more detail, guide grooves 544 are formed in inner surfaces of an opening of the topside of the accommodation part 543 along the topside of the accommodation part 543 to guide the shield 545, such that the power generation region 542 of the panel 541 can be selective exposed opened to the sun by sliding the shield 545 along the guide grooves 544. A space 547 is formed in the rear and bottom sides of the accommodation part 543 so that the shield 545 can be selectively accommodated in the space 547 by sliding the shield 545 into the space 547. Therefore, by selectively placing the shield 545 in the space 547 through the top and rear sides of the accommodation part 543, a space 548 of the panel 541 where the panel 541 is accommodated can be selectively opened and closed. That is, guide grooves 544 may be formed along the rear and bottom sides of the accommodation part 543.

An handle 546 is provided on the topside of the shield 545 so that a user can slide the shield 545 by holding the handle 546.

The solar cell panel 54 is connected to the topside of an outdoor unit 10 by a panel connection part 55. In more detail, the panel connection part 55 connects the topside of the outdoor unit 10 and the bottom side of the accommodation part 543. Therefore, the solar cell panel 54 can be connected to the topside of the outdoor unit 10.

The solar cell panel 54 can be switched between a first disposition in which the power generation region 542 of the solar cell panel 54 is exposed to the sun and a second disposition in which the power generation region 542 is not exposed to the sun. The first disposition of the solar cell panel 54 is shown in Figs. 12 and 13. The second disposition of the solar cell panel 54 is shown in Fig. 14.

In more detail, when the solar cell panel 54 is placed in the first disposition, the shield 545 may be slid along the guide grooves 544 of the accommodation part 543 into the space 547 of the accommodation part 543 and kept in the space 547. In addition, when the solar cell panel 54 is in the second disposition, the shield 545 may be slid along the guide grooves 544 of the accommodation part 543 to screen the opening of the topside of the accommodation part 543. That is, when the solar cell panel 54 is placed in the first disposition, the space 548 of the accommodation part 543 where the panel 541 is accommodated is not screened by the shield 545 so that the power generation region 542 can be exposed to the sun. In addition, when the solar cell panel 54 is placed in the first disposition, the space 548 of the accommodation part 543 where the panel 541 is accommodated is screened by the shield 545 so that the power generation region 542 cannot be exposed to the sun.

Therefore, when the solar cell panel 54 is not used, that is, when power generation at the power generation region 542 is not necessary, the solar cell panel 54 is switched to the second disposition to protect the power generation region 542 from external environments. In more detail, when power generation at the power generation region 542 is not necessary, the shield 545 screens the power generation region 542 of the solar cell panel 54 so that the power generation region 542 can be protected from external environments.

Hereinafter, an explanation will be given of an air conditioner including a solar cell according to a fifth embodiment with reference to the accompanying drawings. Unlike the first embodiment, in the current embodiment, a solar cell panel can be turned over to vary the light-receiving area of the solar cell panel or protect a power generation region of the solar cell panel. In the current embodiment, the same elements as those of the first embodiment will not be described again.

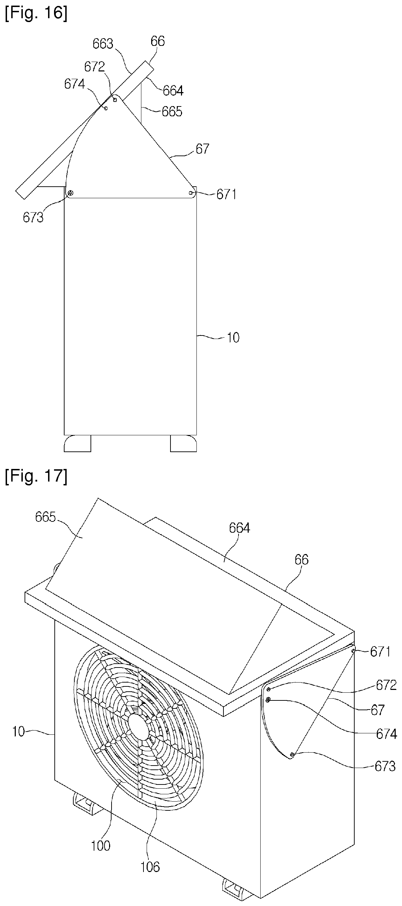

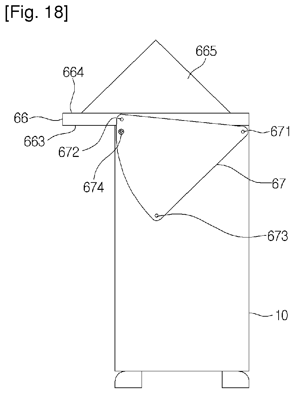

Fig. 15 is a perspective view illustrating a solar power generation operation of an air conditioner including a solar cell according to a fifth embodiment, and Fig. 16 is a side view illustrating the solar power generation operation of the air conditioner including the solar cell according to the fifth embodiment. Fig. 17 is a perspective view illustrating a stop of the solar power generation operation of the air conditioner including the solar cell according to the fifth embodiment, and Fig. 18 is a side view illustrating the stop of the solar power generation operation of the air conditioner including the solar cell according to the fifth embodiment.

Referring to Figs. 15 and 18, according to the current embodiment, a solar cell panel 66 can be rotated upside down according to whether the solar cell panel 66 is used or not, and panel connection parts 67 connect the solar cell panel 66 to the topside of an outdoor unit 10. The solar cell panel 66 can be switched between a first disposition in which the power generation region 663 of the solar cell panel 66 is exposed to the sun and a second disposition in which the power generation region 663 is disposed in a direction opposite to the sun (that is, in a direction forward the outdoor unit 10).

In detail, two panel connection parts 67 are provided which are connected to the solar cell panel 66 and ends of both sides of the outdoor unit 10. The panel connection parts 67 are rotatably fixed to rear ends of both sides of the outdoor unit 10. The panel connection parts 67 may have a fan shape and be centered on points fixed to the rear ends of both sides of the outdoor unit 10.

In addition, front upper ends of the panel connection parts 67 are rotatably connected to the solar cell panel 66. At this time, at least one of a length from the front end of the solar cell panel 66 to a point of the solar cell panel 66 connected to the panel connection part 67 and a length from the point to the rear end of the solar cell panel 66 is shorter than a length from the rotation center of the panel connection part 67 (that is, a first point 671 of the panel connection part 67 connected to the outdoor unit 10) to a second point 672 of the panel connection part 67 connected to the solar cell panel 66. Therefore, the power generation region 663 and a power non-generation region 664 of the solar cell panel 66 can be freely turned over.

In addition, a coupling part is provided at a third point 673 of the panel connection part 67 which corresponds to a lateral front end of the outdoor unit 10 when the solar cell panel 66 is placed in the first disposition, and a coupling part is provided at a fourth point 674 of the panel connection part 67 which corresponds to the lateral frond end of the outdoor unit 10 when the solar cell panel 66 is placed in the second disposition.

The coupling parts may be coupling holes, and additional coupling members may be inserted into the outdoor unit 10 through the coupling holes. That is, when the solar cell panel 66 is placed in the first disposition, the solar cell panel 66 may be fixed to the outdoor unit 10 by inserting a coupling member into a coupling hole formed in the third point 673 of the panel connection part 67 and a side of the outdoor unit 10. In addition, when the solar cell panel 66 is placed in the second disposition, the solar cell panel 66 may be fixed to the outdoor unit 10 by inserting a coupling member into a coupling hole formed in the fourth point 674 of the panel connection part 67 and the side of the outdoor unit 10.

A support part 665 may be provided on the power non-generation region 664, that is, on a side opposite to the power generation region 663, to support the solar cell panel 66 when the solar cell panel 66 is in the first disposition. When the solar cell panel 66 is in the first disposition, the support part 665 makes contact with the topside of the outdoor unit 10 so that the solar cell panel 66 can be kept at a preset angle. For example, if it is necessary that the power generation region 663 of the solar cell panel 66 faces forward at an upward angle of 45 , the support part 665 may have a triangular sectional shape both sides of which make an angle of 45 with the power generation region 663. In this case, when the solar cell panel 66 is in the first disposition, since one side of the support part 665 makes contact with the topside of the outdoor unit 10, the power generation region 663 of the solar cell panel 66 can face forward at an upward angle of 45.

The first arrangement of the solar cell panel 66 is shown in Figs. 15 and 16. The second arrangement of the solar cell panel 66 is shown in Figs. 17 and 18. That is, when the solar cell panel 66 is in the first disposition, the power generation region 663 is kept to face the sun, and when the solar cell panel 66 is in the second disposition, the power generation region 663 is kept to face a side opposite to the sun, that is, the topside of the outdoor unit 10.

According to the air conditioner 1, when the solar cell panel 66 is not used, that is, when power generation at the power generation region 663 is not necessary, the solar cell panel 66 is placed in the second disposition so that the power generation region 663 can be protected from external environments. In more detail, when the solar cell panel 66 is not used, since the power generation region 663 of the solar cell panel 66 is kept to face the outdoor unit 10 (faces downward), the power generation region 663 can be prevented from being damaged by various causes such as rain and hail.

## Claims

1. An air conditioner (1) comprising:
an outdoor unit (10) configured to exchange heat with outdoor air; and
a solar cell panel (22) disposed at a side of the outdoor unit (10) and comprising a plurality of parts (221, 222) that are relatively movable, the plurality of parts (221, 222)comprising power generation regions (223) configured to generate electricity from solar light,
wherein as the plurality of parts (221, 222) are moved relatively to each other, areas of the power generation regions (223) exposed to the sun are varied,
whereby:
as the plurality of parts (221, 222) are moved relative to each other, the solar cell panel (22) is selectively switched to one of a first disposition where the power generation regions (223) of the plurality of parts (221, 222) are exposed to the sun and a second disposition where the power generation regions (223) of the plurality of parts (221, 222) are not exposed to the sun, and the air conditioner **characterized in that**:
the solar cell panel (22) is rotatably connected to the outdoor unit,
wherein in the first disposition, the solar cell panel (22) is kept in a rotated state where the power generation region (223) is exposed to the sun, and in the second disposition, the solar cell panel (22) is kept in a rotated state where the power generation region (223) faces the outdoor unit.

2. The air conditioner according to claim 1, further comprising a panel connection part configured to connect the solar cell panel to the outdoor unit,
wherein a point of the panel connection part is rotatably connected to the outdoor unit, and the other point of the panel connection part is rotatably connected to the solar cell panel.

3. The air conditioner according to claim 2, wherein the panel connection part has a first point, a second point, a third point, and a fourth point, the panel connection part is connected to the outdoor unit and the solar cell panel at the first and second points, respectively, and coupling holes are provided at the third and fourth points.

4. The air conditioner according to claim 3, wherein when the solar cell panel is placed in the first disposition, the solar cell panel is fixed to the outdoor unit by inserting a coupling member into the coupling hole formed in the third point, and when the solar cell panel is placed in the second disposition, the solar cell panel is fixed to the outdoor unit by inserting a coupling member into the coupling hole formed in the fourth point.

5. The air conditioner according to claim 4, wherein two panel connection parts are provided, and the panel connection parts are rotatably fixed to rear ends of both sides of the outdoor unit, and
wherein the first point is a rotation center of the panel connection part.

6. The air conditioner according to claim 4, wherein a length from the front end of the solar cell panel to the second point of the solar cell panel is shorter than a length from the first point to the second point, such that the power generation region and a power non-generation region of the solar cell panel is able to be freely turned over.

7. The air conditioner according to claim 4, wherein a support part is provided on the power non-generation region of the solar cell panel to support the solar cell panel when the solar cell panel is in the first disposition.

8. The air conditioner according to claim 7, wherein when the solar cell panel is in the first disposition, the support part makes contact with a topside of the outdoor unit so that the solar cell panel is kept at a preset angle.

9. The air conditioner according to claim 8, wherein when the solar cell panel is in the first disposition, the power generation region of the solar cell panel faces forward at an upward angle of 45°.

10. The air conditioner according to claim 9, wherein the support part has a triangular sectional shape both sides of which make an angle of 45° with the power generation region of the solar cell panel.

## Patentansprüche

1. Klimaanlage (1) mit:
einer Außeneinheit (10), die konfiguriert ist, Wärme mit der Außenluft auszutauschen; und
einer Solarzellenplatte (22), die auf einer Seite der Außeneinheit (10) angeordnet ist und mehrere Teile (221, 222) aufweist, die relativbeweglich sind, wobei die mehreren Teile (221, 222) Stromerzeugungsbereiche (223) aufweisen, die konfiguriert sind, um aus Sonnenlicht Elektrizität zu erzeugen,
wobei, wenn die mehreren Teile (221, 222) relativ zueinander bewegt werden, der Sonne ausgesetzte Flächen der Stromerzeugungsbereiche (223) verändert werden,
wobei:
wenn die mehreren Teile (221, 222) relativ zueinander bewegt werden, die Solarzellenplatte (22) selektiv in eine erste Anordnung, wo die Stromerzeugungsbereiche (223) der mehreren Teile (221, 222) der Sonne ausgesetzt sind, oder in eine zweite Anordnung geschaltet wird, wo die Stromerzeugungsbereiche (223) der mehreren Teile (221, 222) nicht der Sonne ausgesetzt sind, und die Klimaanlage **dadurch gekennzeichnet ist, dass**:
die Solarzellenplatte (22) drehbar mit der Außeneinheit verbunden ist,
wobei in der ersten Anordnung die Solarzellenplatte (22) in einem gedrehten Zustand gehalten wird, wo der Stromerzeugungsbereich (223) der Sonne ausgesetzt ist, und in der zweiten Anordnung die Solarzellenplatte (22) in einem gedrehten Zustand gehalten wird, wo der Stromerzeugungsbereich (223) zur Außeneinheit weist.

2. Klimaanlage nach Anspruch 1, die ferner einen Plattenverbindungsteil aufweist, der konfiguriert ist, die Solarzellenplatte mit der Außeneinheit zu verbinden,
wobei ein Punkt des Plattenverbindungsteils drehbar mit der Außeneinheit verbunden ist und der andere Punkt des Plattenverbindungsteils drehbar mit der Solarzellenplatte verbunden ist.

3. Klimaanlage nach Anspruch 2, wobei der Plattenverbindungsteil einen ersten Punkt, einen zweiten Punkt, einen dritten Punkt und einen vierten Punkt aufweist, der Plattenverbindungsteil am ersten bzw. zweiten Punkt mit der Außeneinheit und der Solarzellenplatte verbunden ist und am dritten und vierten Punkt Kopplungslöcher vorgesehen sind.

4. Klimaanlage nach Anspruch 3, wobei, wenn die Solarzellenplatte in der ersten Anordnung angeordnet ist, die Solarzellenplatte an der Außeneinheit durch Einsetzen eines Kopplungselements in das Kopplungsloch befestigt wird, das im dritten Punkt ausgebildet ist, und wenn die Solarzellenplatte in der zweiten Anordnung angeordnet ist, die Solarzellenplatte an der Außeneinheit durch Einsetzen eines Kopplungselements in das Kopplungsloch befestigt wird, das im vierten Punkt ausgebildet ist.

5. Klimaanlage nach Anspruch 4, wobei zwei Plattenverbindungsteile vorgesehen sind und die Plattenverbindungsteile drehbar an den hinteren Enden von beiden Seiten der Außeneinheit befestigt sind, und
wobei der erste Punkt ein Drehpunkt des Plattenverbindungsteils ist.

6. Klimaanlage nach Anspruch 4, wobei eine Länge vom vorderen Ende der Solarzellenplatte zum zweiten Punkt der Solarzellenplatte kürzer als eine Länge vom ersten Punkt zum zweiten Punkt ist, so dass der Stromerzeugungsbereich und ein nicht stromerzeugender Bereich der Solarzellenplatte frei umgedreht werden können.

7. Klimaanlage nach Anspruch 4, wobei ein Halteteil am nicht stromerzeugenden Bereich der Solarzellenplatte vorgesehen ist, um die Solarzellenplatte zu halten, wenn sich die Solarzellenplatte in der ersten Anordnung befindet.

8. Klimaanlage nach Anspruch 7, wobei, wenn sich die Solarzellenplatte in der ersten Anordnung befindet, der Halteteil mit einer Oberseite der Außeneinheit Kontakt herstellt, so dass die Solarzellenplatte in einem voreingestellten Winkel gehalten wird.

9. Klimaanlage nach Anspruch 8, wobei, wenn sich die Solarzellenplatte in der ersten Anordnung befindet, der Stromerzeugungsbereich der Solarzellenplatte unter einem Aufwärtswinkel von 45° nach vorn weist.

10. Klimaanlage nach Anspruch 9, wobei der Halteteil eine dreieckige Querschnittsform aufweist, von der beide Seiten einen Winkel von 45° mit dem Stromerzeugungsbereich der Solarzellenplatte bilden.

## Revendications

1. Climatiseur (1), comprenant :
une unité extérieure (10) prévue pour échanger de la chaleur avec l'air extérieur ; et
un panneau de cellules solaires (22) disposé sur un côté de l'unité extérieure (10) et comprenant une pluralité de sections (221, 222) mobiles les unes par rapport aux autres, ladite pluralité de sections (221, 222) comprenant des zones de génération d'énergie (223) prévues pour générer de l'électricité à partir de la lumière solaire,
où, quand les plusieurs sections (221, 222) sont déplacées les unes par rapport aux autres, les surfaces des zones de génération d'énergie (223) exposées au soleil sont modifiées,
de sorte que :
quand les plusieurs sections (221, 222) sont déplacées les unes par rapport aux autres, le panneau de cellules solaires (22) est commuté sélectivement vers une première disposition où les zones de génération d'énergie (223) de la pluralité de sections (221, 222) sont exposées au soleil ou vers une deuxième disposition où les zones de génération d'énergie (223) de la pluralité de sections (221, 222) ne sont pas exposées au soleil, ledit climatiseur
étant **caractérisé en ce que** :
le panneau de cellules solaires (22) est raccordé de manière rotative à l'unité extérieure,
le panneau de cellules solaires (22) étant dans la première disposition maintenu dans un état de rotation où la zone de génération d'énergie (223) est exposée au soleil, et le panneau de cellules solaires (22) étant dans la deuxième disposition maintenu dans un état de rotation où la zone de génération d'énergie (223) fait face à l'unité extérieure.

2. Climatiseur selon la revendication 1, comprenant en outre une partie de connexion de panneau prévue pour raccorder le panneau de cellules solaires à l'unité extérieure,
où un point de la partie de connexion de panneau est raccordé de manière rotative à l'unité extérieure, et l'autre point de la partie de connexion de panneau est raccordé de manière rotative au panneau de cellules solaires.

3. Climatiseur selon la revendication 2, où la partie de connexion de panneau présente un premier point, un deuxième point, un troisième point et un quatrième point, la partie de connexion de panneau est raccordée à l'unité extérieure et au panneau de cellules solaires respectivement sur le premier et sur le deuxième points, et des trous d'accouplement sont prévus sur le troisième et le quatrième points.

4. Climatiseur selon la revendication 3, où, si le panneau de cellules solaires se trouve dans la première disposition, le panneau de cellules solaires est fixé à l'unité extérieure par insertion d'un élément d'accouplement dans le trou d'accouplement formé sur le troisième point, et si le panneau de cellules solaires se trouve dans la deuxième disposition, le panneau de cellules solaires est fixé à l'unité extérieure par insertion d'un élément d'accouplement dans le trou d'accouplement formé sur le quatrième point.

5. Climatiseur selon la revendication 4, où deux parties de connexion de panneau sont prévues, et les parties de connexion de panneau sont fixées de manière rotative à des extrémités arrière sur les deux côtés de l'unité extérieure, et
où le premier point est un centre de rotation de la partie de connexion de panneau.

6. Climatiseur selon la revendication 4, où une longueur entre l'extrémité avant du panneau de cellules solaires et le deuxième point du panneau de cellules solaires est inférieure à une longueur entre le premier point et le deuxième point, de manière à permettre un libre retournement de la zone de génération d'énergie et d'une zone non génératrice d'énergie du panneau de cellules solaires.

7. Climatiseur selon la revendication 4, où une partie de support est prévue sur la zone non génératrice d'énergie du panneau de cellules solaires pour supporter le panneau de cellules solaires quand le panneau de cellules solaires se trouve dans la première disposition.

8. Climatiseur selon la revendication 7, où, si le panneau de cellules solaires se trouve dans la première disposition, la partie de support entre en contact avec le dessus de l'unité extérieure de manière à maintenir le panneau de cellules solaires suivant un angle prédéfini.

9. Climatiseur selon la revendication 8, où, si le panneau de cellules solaires se trouve dans la première disposition, la zone de génération d'énergie du panneau de cellules solaires est orientée vers l'avant suivant un angle ascendant de 45°.

10. Climatiseur selon la revendication 9, où la partie de support a une section triangulaire dont deux côtés forment un angle de 45° avec la zone de génération d'énergie du panneau de cellules solaires.
